Europäisches Patentamt

European Patent Office

Office européen des brevets

(11) Numéro de publication: **0 362 043**
**A1**

(12) ## DEMANDE DE BREVET EUROPEEN

(21) Numéro de dépôt: 89402623.6

(22) Date de dépôt: 26.09.89

(51) Int. Cl.5: **F16H 57/04 , F16N 21/00**

(30) Priorité: 27.09.88 FR 8812578

(43) Date de publication de la demande:
04.04.90 Bulletin 90/14

(84) Etats contractants désignés:
DE ES GB IT

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Hubert, Jean-Michel**
**9, rue de Zurich**
**F-92500 Rueil-Malmaison(FR)**
Inventeur: **Sellos, Gérard Max**
**Résidence Monceau 85, Route de Chatou**
**F-78420 Carrieres-Sur-Seine(FR)**
Inventeur: **Blaisius, Marc Eric**
**Résidence Val Eglantine 53-59, Route de Chatou**
**F-78420 Carrieres-Sur-Seine(FR)**

(74) Mandataire: **Chassagnon, Jean Alain et al**
**8/10, avenue Emile Zola**
**F-92109 Boulogne-Billancourt(FR)**

(54) **Dispositif de repartition d'huile de lubrification d'éléments fous sur un arbre.**

(57) Dispositif de répartition d'huile de lubrification d'éléments fous (2, 3, 4, 5) sur un arbre (1), notamment pour boîte de vitesses, comportant un canal central (6) d'alimentation et de n trous radiaux d'alimentation (7, 8, 9, 10) pour chacun desdits n éléments fous (2, 3, 4, 5), caractérisé en ce qu'un élément de répartition d'huile (11) est engagé dans ledit canal central (6) et solidarisé avec ledit arbre (1) au moyen d'un système d'immobilisation, ledit élément de répartition (11) comportant n canaux élémentaires (12, 13, 14, 15) correspondant aux n trous radiaux d'alimentation (7, 8, 9, 10).

FIG.1

## DISPOSITIF DE REPARTITION D'HUILE DE LUBRIFICATION D'ELEMENTS FOUS SUR UN ARBRE

La présente invention se rapporte à un dispositif de répartition d'huile de lubrification d'éléments fous sur un arbre et notamment pour les pignons fous d'un arbre de boîte de vitesses.

Une des difficultés, dans la lubrification d'une boîte de vitesses, consiste à répartir convenablement le flux d'huile destiné à l'alésage de chacun des pignons fous montés sur les arbres de boîte de vitesses.

Généralement les pignons fous sont montés sur un même arbre, qui est le secondaire ou le primaire, et l'alimentation en huile se fait par un canal central, qui est percé de trous radiaux en regard de chacun des pignons fous. Ce type d'alimentation connu présente l'inconvénient de mal répartir le débit d'huile entre chacun des pignons fous. En effet, le flux d'huile, qui arrive aux pignons fous les plus éloignés de l'alimentation, est habituellement insuffisant.

Le but de la présente invention est de proposer un dispositif de répartition d'huile, qui permette d'alimenter équitablement chaque point de lubrification d'un élément fou sur un arbre, et ceci quel que soit l'éloignement axial du point de lubrification par rapport à la source de lubrification.

Selon un mode de réalisation de l'invention, le dispositif de répartition d'huile de lubrification d'éléments fous sur un arbre, notamment pour boîte de vitesses, comporte un canal central d'alimentation et des trous radiaux d'alimentation pour chacun desdits éléments fous.

Un élément de répartition d'huile est engagé dans ledit canal central et solidarisé avec ledit arbre au moyen d'un système d'immobilisation, ledit élément de répartition comportant autant de canaux élémentaires qu'il y a de trous radiaux d'alimentation.

L'élément de répartition est constitué par autant d'ailettes qu'il y a de trous radiaux et par des éléments radiaux, chaque canal élémentaire est la combinaison de deux ailettes, et il vient se fermer dans la zone du trou d'alimentation voulu au moyen de l'élément radial correspondant qui est situé après ledit trou d'alimentation.

Les ailettes sont réparties de manière à avoir des secteurs angulaires, qui permettent d'obtenir les débits de lubrification voulus pour chacun des points de lubrification.

Selon un mode de réalisation de l'invention, les ailettes sont inclinées en forme d'hélice, de façon à donner une vis qui aspire l'huile de lubrification lors de la rotation.

Selon un mode de réalisation de l'invention, le système d'immobilisation consiste en un téton qui est solidaire de l'élément de répartition d'huile et qui s'engage dans un trou aménagé dans l'arbre.

La présente invention présente ainsi l'avantage d'offrir un dispositif de répartition d'huile de lubrification d'éléments fous sur un arbre, qui alimente chaque point de lubrification de façon correcte. De plus le dispositif selon l'invention est peu coûteux et s'adapte facilement sur des organes existants tels que des boîtes de vitesses, sans modifications d'encombrement.

D'autres caractéristiques et avantages de la présente invention ressortiront de la description qui suit le mode de réalisation donné à titre d'exemple en référence aux dessins annexés sur lesquels :

- la figure 1 est une vue en coupe axiale du dispositif de répartition d'huile de lubrification selon l'invention, dans un arbre secondaire de boîte de vitesses, pour les différents pignons fous ;

- la figure 2 est une vue en perspective cavalière de l'élément de répartition selon l'invention correspondant à la figure 1 ;

- la figure 3 est une coupe suivant 3 de la figure 2 ;

- la figure 4 est une coupe suivant 4 de la figure 2 ;

- la figure 5 est une coupe suivant 5 de la figure 2 ;

- la figure 6 est une vue semblable à la figure 3 d'un autre mode de réalisation de l'invention.

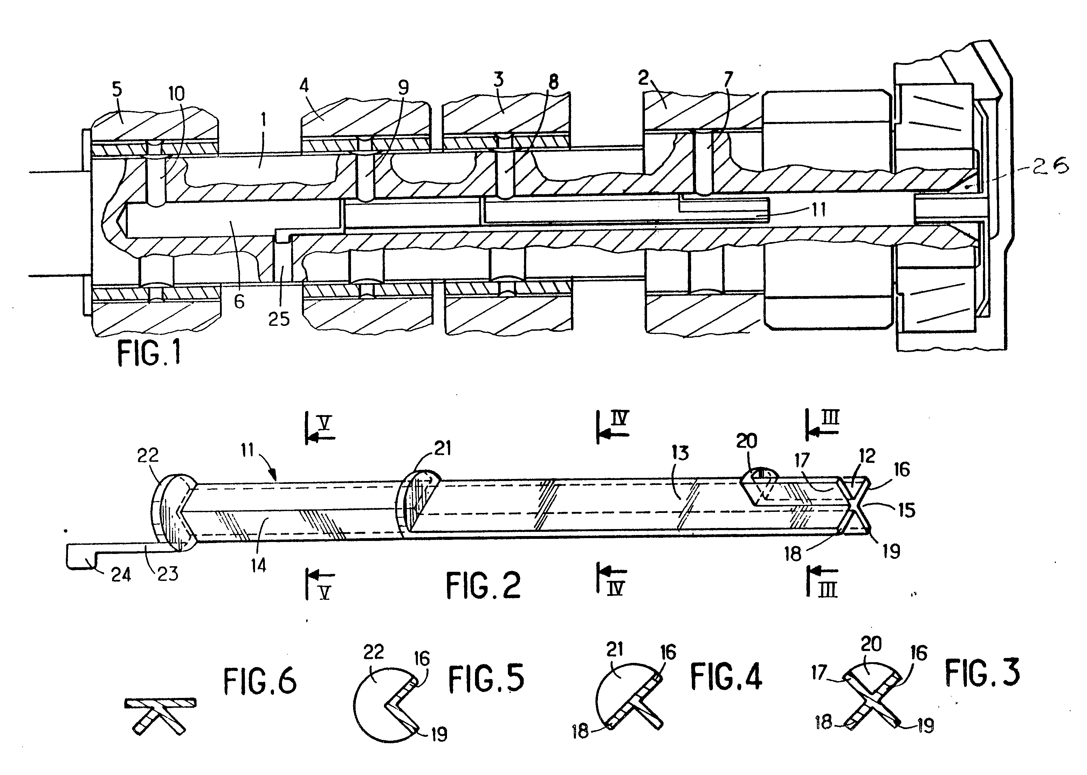

Un mode de réalisation du dispositif de répartition d'huile de lubrification d'éléments fous sur un arbre, selon l'invention, est représenté sur la figure 1.

L'arbre 1 est un arbre secondaire de boîte de vitesses de véhicule automobile de tourisme. Il porte quatre pignons fous : un élément fou 2 pour la première vitesse, un élément fou 3 pour la deuxième vitesse, un élément fou 4 pour la troisième vitesse et un élément fou 5 pour la quatrième vitesse.

L'arbre 1 comporte un canal central 6 d'alimentation, dont l'une des extrémités 26 est reliée à la source d'huile de lubrification et dont l'autre extrémité est fermée.

Le canal central 6 d'alimentation est relié à n trous radiaux d'alimentation pour chacun des points de lubrification. Dans le cas de la figure 1, il y a quatre trous radiaux d'alimentation 7, 8, 9 et 10 pour chacun des n éléments fous 2, 3, 4 et 5.

Un élément de répartition d'huile 11 est engagé dans le canal central 6, et il est solidaire avec l'arbre 1 au moyen d'un système d'immobilisation. L'élément de répartition d'huile 11 comporte n canaux élémentaires (12, 13, 14, 15) correspondant aux n trous radiaux d'alimentation (7, 8, 9, 10).

L'élément de répartition d'huile 11 est constitué par n ailettes (16, 17, 18, 19) et n-1 éléments radiaux (20, 21, 22). Chaque canal élémentaire (12, 13, 14, 15) est la combinaison de deux ailettes, et il vient se fermer dans la zone du point radial d'alimentation (7, 8, 9, 10) voulu par l'intermédiaire de l'élément radial (20, 21, 22) correspondant, qui est situé après ledit trou radial d'alimentation (7, 8, 9, 10).

L'élément de répartition est constitué par quatre ailettes (16, 17, 18, 19) disposées à 90 degrés les unes des autres, et par trois éléments radiaux (20, 21, 22) de façon à coopérer avec les quatre trous radiaux d'alimentation (7, 8, 9, 10). Le premier canal élémentaire (12) est caractérisé par la première ailette (16) et la deuxième ailette (17) et par le premier élément radial (20). Le deuxième canal élémentaire (13) est constitué par la deuxième ailette (17) et la troisième ailette (18) jusqu'au premier élément radial (20), puis par la première ailette (16) et la troisième ailette (18) qui sont opposées jusqu'au deuxième élément radial (21). Le troisième canal élémentaire (14) est constitué par la troisième ailette (18) et la quatrième ailette (19) jusqu'au deuxième élément radial (21) puis par la quatrième ailette (19) et la première ailette (16) jusqu'au troisième élément radial (22). Le quatrième canal élémentaire (15) est constitué par la quatrième ailette (19) et la première ailette (16) jusqu'au troisième élément radial (22).

Dans le cas des figures 2, 3, 4 et 5 les ailettes 16, 17, 18 et 19 sont réparties de manière à obtenir des secteurs angulaires identiques pour avoir une répartition égale du débit de lubri fication.

Dans le cas de la figure 6 qui représente une variante de réalisation de l'invention, les ailettes 16, 17, 18 et 19 sont réparties de manière à obtenir des secteurs angulaires inégaux afin d'avoir des débits de lubrification différents.

Le système d'immobilisation de l'élément de répartition d'huile 11 consiste en une barrette axiale 23 souple, qui est munie à extrémité d'un téton 24. La barrette axiale 23 est solidaire du dernier élément radial 22 de l'élément de répartition d'huile 11. Le téton 24 s'engage dans un trou radial 25, qui est aménagé dans l'arbre 1.

Lors du montage de l'élément de répartition d'huile 11 dans le canal central d'alimentation 6, la barrette axiale 23, qui est souple, se rapproche de l'axe, et elle revient sa position initiale dès que son téton 24 arrive en face du trou radial 25, dans lequel il s'engage.

Afin de faciliter la réalisation de l'arbre 11, le trou radial 25 peut avoir le même axe que l'un des trous radiaux d'alimentation 7, 8, 9 ou 10, par exemple le trou radial d'alimentation 10.

Dans une variante de réalisation de l'invention, non représentée sur les figures, les ailettes sont inclinées en forme d'hélice le long de l'axe de l'élément de répartition d'huile 11. On obtient ainsi une vis qui aspire l'huile de lubrification lors de la rotation de l'arbre 1.

## Revendications

1. Dispositif de répartition d'huile de lubrification d'éléments fous (2, 3, 4, 5) sur un arbre (1), notamment pour boîte de vitesses, comportant un canal central (6) d'alimentation et de n trous radiaux d'alimentation (7, 8, 9, 10) pour chacun desdits n éléments fous (2, 3, 4, 5), caractérisé en ce qu'un élément de répartition d'huile (11) est engagé dans ledit canal central (6) et solidarisé avec ledit arbre (1) au moyen d'un système d'immobilisation, ledit élément de répartition (11) comportant n canaux élémentaires (12, 13, 14, 15) correspondant aux n trous radiaux d'alimentation (7, 8, 9, 10).

2. Dispositif de répartition selon la revendication 1 caractérisé en ce que l'élément de répartition (11) est constitué par n ailettes (16, 17, 18, 19) et n-1 éléments radiaux (20, 21, 22), chaque canal élémentaire (12, 15) est la combinaison de deux ailettes (16, 19) et il vient se fermer dans la zone du trou radial d'alimentation (7, 10) voulu au moyen de l'élément radial (20, 22) correspondant, qui est situé après ledit trou radial d'alimentation (7, 10).

3. Dispositif de répartition selon la revendication 2 caractérisé en ce que les ailettes (16, 19) sont réparties de manière à obtenir des secteurs angulaires de valeur différente qui donnent des débits de lubrification différents.

4. Dispositif de répartition selon la revendication 2 caractérisé en ce que les ailettes (16, 19) sont réparties de manière é obtenir des secteurs angulaires identiques pour avoir une répartition égale du débit de lubrification.

5. Dispositif de répartition selon la revendication 2 caractérisé en ce que l'élément de répartition est constitué par quatre ailettes (16, 17, 18, 19) disposées à 90 degrés les unes des autres et par trois éléments radiaux (20, 21, 22) de façon à coopérer avec quatre trous radiaux d'alimentation (7, 8, 9, 10), le premier canal élémentaire (12) étant constitué par la première ailette (16) et la deuxième ailette (17) et par le premier élément radial (20); le deuxième canal élémentaire (13) étant constitué par la deuxième ailette (17) et la troisième ailette (18) jusqu'au premier élément radial (20), puis par la première ailette (16) et la troisième ailette (18), qui sont opposées, jusqu'au deuxième élément radial (21); le troisième canal élémentaire (14) étant constitué par la troisième ailette (18) et la quatrième ailette (19) jusqu'au deuxième élément radial (21), puis par la quatrième ailette (19) et la première ailette (16) jusqu'au troisième élément radial (22), le quatrième canal élémentaire (15) étant constitué par la quatrième ailette (19) et la première ailette (16) jusqu'au troisième élément radial (22).

6. Dispositif de répartition selon la revendication 2, caractérisé en ce que les ailettes sont inclinées en forme d'hélice le long de l'axe de l'élément de répartition (11) de manière à obtenir une vis qui aspire l'huile de lubrification lors de la rotation de l'arbre (1).

7. Dispositif de répartition selon la revendication 2 caractérisé en ce que le système d'immobilisation consiste en une barrette axiale (23) souple munie à son extrémité d'un téton (24), qui s'engage dans un trou radial (25) aménagé dans l'arbre (1), ladite barrette axiale (23) étant solidaire du dernier élément radial (22).

8. Dispositif de répartition selon la revendication 7 caractérisé en ce que le trou radial (25) a le même axe que 'un des trous radiaux d'alimentation (7, 10).

FIG.1

FIG.2

FIG.3

FIG.4

FIG.5

FIG.6

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 357 513 (LOVINFOSSE) <br> * Page 2, colonne de gauche, paragraphe 7 - colonne de droite, paragraphe 1; figures 3,4 * | 1 | F 16 H 57/04 <br> F 16 N 21/00 |
| A | FR-A-2 328 879 (VEREINIGTE ÖSTERREICHISCHE EISEN- UND STAHLWERKE - ALPINE MONTAN AG) <br> * Page 5, lignes 20-36 * | 1 | |
| A | DE-C- 83 368 (GASMOTOREN-FABRIK DEUTZ) <br> * Revendication; figures * | 1 | |
| A | DE-B-1 009 446 (AG FÜR UNTERNEHMUNGEN DER EISEN- UND STAHLINDUSTRIE) <br> * Colonne 3, lignes 23-41; figures 1,2 * | 1 | |
| A | GB-A-2 156 485 (NIPPON PISTON RING) | | |

**DOMAINES TECHNIQUES RECHERCHES (Int. Cl.5)**

F 16 H
F 16 N

Le présent rapport a été établi pour toutes les revendications

| Lieu de la recherche | Date d'achèvement de la recherche | Examinateur |
|---|---|---|
| LA HAYE | 18-12-1989 | BEERNAERT J.E. |